# EUROPÄISCHE PATENTSCHRIFT

(11) **EP 2 113 414 B1**
(45) Veröffentlichungstag und Bekanntmachung des Hinweises auf die Patenterteilung: **11.07.2018**
(21) Anmeldenummer: 09001356.6
(22) Anmeldetag: 09.03.2009
(51) Int. Cl.: B62D 21/14, B62D 21/20

(54) **Fahrgestell für Container, Aufbauten und dergleichen Ladungsbehälter**
Chassis for containers, structures and similar load containers
Châssis pour un conteneur, des montages et des supports de charge analogues

(30) Priorität: 30.04.2008 DE 102008021807
(43) Veröffentlichungstag der Anmeldung: 04.11.2009
(73) Patentinhaber: Fahrzeugwerk Bernard Krone GmbH, 48480 Spelle (DE)
(72) Erfinder: Krone, Bernard, 48480 Spelle (DE); Evers, Heinz, 49733 Haren (DE); Herding, Michael, 49757 Werlte (DE)
(74) Vertreter: Busse & Busse

(56) Entgegenhaltungen:
- EP-A- 1 621 399
- EP-A- 1 992 523
- BE-A3- 1 002 515
- BE-A6- 1 004 024
- FR-A- 2 880 861

## Beschreibung

Die Erfindung bezieht sich auf ein Fahrgestell für Container, Aufbauten und dergleichen Ladungsbehälter in einer Ausbildung gemäß dem Oberbegriff des Patentanspruches 1.

Fahrgestelle der vorgenannten Art zum Transport von Containern unterschiedlicher Größe sind bekannt. Container, die auf solchen Fahrgestellen zu transportieren sind, sind beispielsweise 20 bis 40 Fuß-Container in üblicher genormter Gestaltung, aber auch 45 Fuß-Container als sogenannte Iso-Container oder sogenannte Geest-Container. Übliche Fahrgestelle sind auf den Transport bestimmter Containergrößen beschränkt. Dazu sind Feststeller in Gestalt von Sicherungsmitteln vorgesehen, die beispielsweise von unten in vorgesehene Aussparungen des Containers eingreifen, in der Transportstellung des Containers verriegelbar sind und zum Absetzen des Containers entriegelt werden können.

Aus dem DE 202 11 194 U1 ist ein Fahrgestell für Container, Aufbauten und Ladungsbehälter bekannt, bei dem in einem vorderen Auflieger angebrachte Containerverriegelungen jeweils um eine Achse aus der Eingangslage mit Standardcontainern in eine Nichtarbeitslage außerhalb des Transportbereichs von Containern zu verschwenken sind, wozu diese um eine fahrtrichtungsparallele horizontale Achse in eine nach oben verschwenkte Nichtgebrauchsstellung zu überführen sind. Zusätzlich sind Feststeller vorgesehen, die verstellbar ausgebildet und derart anzuordnen sind, dass sie in entsprechende Öffnungen der Beschläge von 40 Fuß-Containern und 45-Fuß-Containern zu bringen sind. Um dies durchführen zu können, sind jedoch Werkzeuge einzusetzen, womit ein nicht unerheblicher Arbeitsaufwand einhergeht.

Aus der DE 10 2005 050 928 ist ein Fahrgestell für Container, Aufbauten und dergleichen Ladungsbehälter mit einem längenverstellbaren Fahrgestellchassis bekannt, bei dem ein seitlicher Feststeller als Verschlußhebel ausgebildet und mitsamt seiner Schwenkachse lageverschieblich in die jeweilige Verriegelungsposition zu bringen ist. Dazu ist ein Verriegelungshebel vorgesehen, der einen Exzenterbereich aufweist und als Einhandbedienhebel vorgesehen werden kann, so dass über eine Einhandbedienung der Feststeller eine jeweilige querverschiebliche Lage zur Verriegelungspositionierung eingenommen werden kann. Damit sind variable Verriegelungsmöglichkeiten zu vollziehen, so dass diese Verriegelungen für Containergestaltungen geeignet sind, die als 20 bis 45 Fuß-Container ausgebildet sind.

Darüber hinaus ist bei dem in der vorgenannten Schrift offenbarten Fahrgestell an dem vorderen Fahrgestellquerträger eine weitere Feststellungsmöglichkeit durch weitere Feststeller vorgesehen, die translatorisch bewegbar an einer Führungswelle ausgebildet sind, aus einer mittigen Stellung nach außen zu überführen sind und nach einer 180°-Schwenkbewegung in eine jeweilige Überkopfsicherungsstellung bewegt werden können, so dass sie Container von unten her sichern. Der damit einhergehende Aufwand ist jedoch erheblich.

Es ist Aufgabe der vorliegenden Erfindung, ein Fahrgestell der eingangs genannten Art zur Verfügung zu stellen, bei dem mit geringstmöglichem Aufwand die Verriegelung für längenverstellbare Fahrgestellchassis für Container mit und ohne Tunnelausbildung sichergestellt werden kann und auch ein 20 Fuß-Container heckbündig bei einer kompakten Bauform verriegelt und entriegelt werden kann.

Aus der gattungsgemäßen BE-1 002 515 A3 ist ein Fahrgestell für Container, Aufbauten und dgl. Ladungsbehälter mit einem längenverstellbaren Fahrgestellchassis der eingangs genannten Art bekannt, bei dem Feststeller höhenveränderlich an einem hinteren Fahrgestellquerträger abstützbar und aus einer im wesentlichen aufrechten Sicherungsstellung um eine im wesentlichen quer zur Fahrgestelllängsrichtung ausgerichtete Schwenkachse durch eine Schwenkbewegung in Fahrgestellvorwärtsrichtung in eine Außerbetriebsstellung zu überführen sind. Damit ist jedoch keine Verriegelungsmöglichkeit für längenverstellbare Fahrgestellchassis für Container mit und ohne Tunnelausbildung sicher gestellt, um einen 20 Fuß-Container heckbündig bei einer kompakten Bauform verriegeln und entriegeln zu können.

Es ist Aufgabe der vorliegenden Erfindung, ein Fahrgestell der eingangs genannten Art zur Verfügung zu stellen, bei dem mit geringst möglichem Aufwand die Verriegelung für längenverstellbare Fahrgestellchassis für Container mit- und ohne Tunnelausbildung sichergestellt werden kann und auch ein 20 Fuß-Container heckbündig bei einer kompakten Bauform verriegelt und entriegelt werden kann.

Zur Lösung dieser Aufgabe zeichnet sich das Fahrgestell der eingangs genannten Art durch die im Patentanspruch 1 angegebenen Merkmale aus. Hinsichtlich wesentlicher weiterer Ausgestaltungen wird auf die Patentansprüche 2 bis 9 verwiesen.

Damit ist ein Fahrgestell für Container zur Verfügung gestellt, bei dem die an dem hinteren Fahrgestellquerträger vorgesehenen Feststeller zunächst aufgrund ihrer Höhenveränderlichkeit für die Verriegelung von Containern mit und ohne Tunnelausbildung geeignet sind. Durch die Längenverstellung des Fahrgestells können unterschiedliche Containergrößen sicher heckseitig verriegelt und entriegelt werden. Soll das Fahrzeugchassis 20 Fuß-Container heckbündig zu Beladungszwecken aufnehmen, sind die Feststeller in ihrer untersten Höhenpositionierung nach vorne hin zu verschwenken und durch den hinteren Fahrgestellquerträger in Fahrgestellvorwärtsrichtung in ihre Außerbetriebsstellung zu bewegen. Dann können heckbündig von hinten zu beladende Container in eine Mittel- bzw. Transportstellung verbracht werden, um eine erforderliche Sattellast zu erreichen. Mit der heckbündigen Beladungsmöglichkeit gehen erhebliche Vorteile einher.

Damit ist ein Fahrgestell für Container, Aufbauten und dergleichen Ladungsbehälter zur Verfügung gestellt, bei dem aus der Kombination der einklappbaren Feststeller an dem hinteren Fahrgestellquerträger und aufgrund der Höhenverstellbarkeit dieser Feststeller und aufgrund der Überführung in die Außerbetriebsstellung durch eine Lageveränderung des hinteren Fahrgestellquerträgers der Container ohne Tunnel und mit Tunnel sicher verriegelt und entriegelt werden können und auch ein 20-Fuß-Container heckbündig und mittig störungsfrei mit dem Fahrgestellchassis zu verbinden sind. Dies ist bei einer sehr kompakten Bauform möglich, wobei Standardbauteile verbaut werden können.

Der jeweilige Feststeller ist derart höhenveränderlich und schwenkbar an dem hinteren Fahrgestellquerträger abstützbar, dass er in eine unterhalb eines dem hinteren Fahrgestellquerträger vorgeordneten weiteren Fahrgestellquerträgers gelegene Außerbetriebsstellung überführbar ist, so dass an diesem weiteren Fahrgestellquerträger vorgesehene zusätzliche Feststeller für eine Verriegelung z.B. eines 20 Fuß-Containers benutzt werden können.

Dazu hat vorzugsweise dieser weitere Fahrgestellquerträger jeweils seitliche Bereiche, die Ausnehmungsbereiche von unten her bilden, so dass die in Fahrtrichtung weggeklappten und ihre untere Höhenposition gebrachten Feststeller des hinteren Fahrgestellquerträgers in diese von unten her offenen Aufnehmungsbereiche des weiteren Querträgers eintauchen können und mithin in ihrer Außerbetriebsstellung in einer unterhalb dieses weiteren Fahrgestellquerträgers gelegene Parkposition angeordnet sind, so dass sie für die weitere Aufnahme eines Containers nicht weiter hinderlich sind und der hintere Fahrgestellquerträger unter dem weiteren Fahrgestellquerträger gelegen ist, wodurch sich eine außerordentlich kompakte Bauform ergibt, die das Beladen von Containern direkt von hinten ohne störende Querträger erlaubt. Weitere Einzelheiten, Vorteile und Ausgestaltungen der Erfindung ergeben sich aus der weiteren Beschreibung und der Zeichnung.

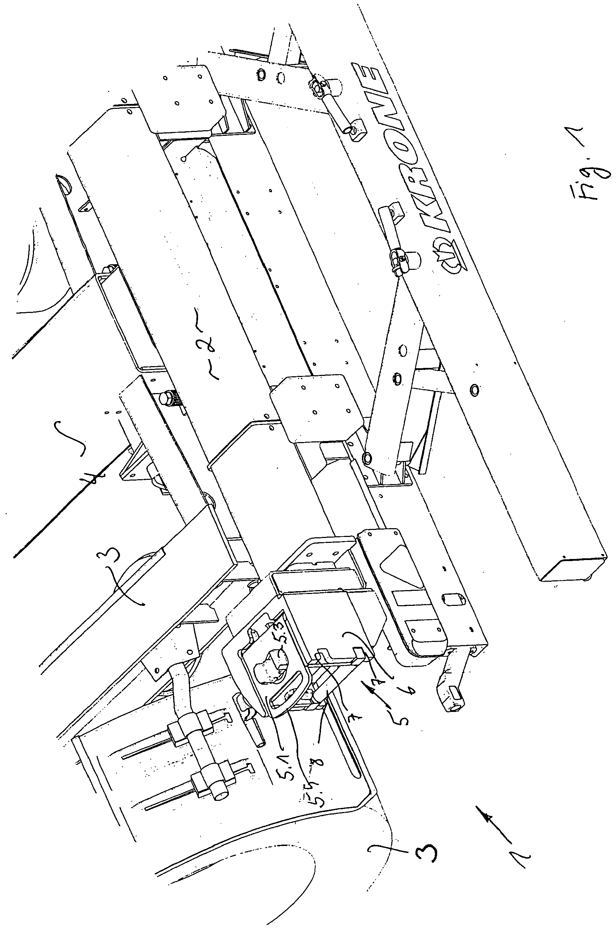

- Fig. 1: in einer schematischen, perspektivischen Darstellung ein Ausführungsbeispiel eines Fahrgestells nach der Erfindung mit Feststellern in ihrer höhenabgesenkten Verriegelungsposition;
- Fig. 2: eine zu Fig. 1 analoge Darstellung mit Feststellern in ihrer erhöhten Verriegelungsposition;
- Fig. 3: eine zu Fig. 1 und 2 analoge Darstellung mit in Fahrgestellvorwärtsrichtung verschwenkter Feststeller;
- Fig. 4: eine zu den Fig. 1 bis 3 analoge Darstellung mit in Fahrgestellvorwärtsrichtung verschwenkter Feststellern und einem hinteren Fahrgestellquerbalken, mit lageverändertem hinteren Fahrgestellquerträger;
- Fig. 5: eine Seitenansicht auf das Ausführungsbeispiel nach Fig. 4, und
- Fig. 6: eine Seitenansicht auf das Fahrgestell mit einem längenveränderten Fahrzeugchassis mit der Endstellung des hinteren Fahrgestellquerrahmens.

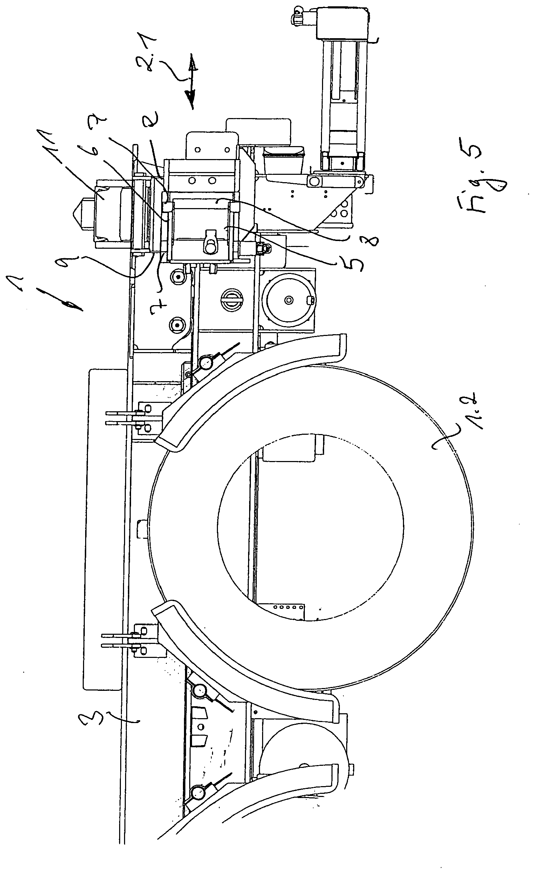

In den Figuren sind grundsätzlich gleichwirkende Teile mit übereinstimmenden Bezugsziffern angegeben. In der Zeichnung ist allgemein mit 1 ein nur im Bereich des endseitigen hinteren Fahrgestellquerträgers 2 veranschaulichten Fahrgestell 1 dargestellt. Das Fahrgestell ist über Räder auf dem Erdboden abstützbar und hat endseitige Fahrgestellholme 4.1 und 4.2, die in nicht im Einzelnen veranschaulichte Fahrgestelllängstraversen lageverschieblich und feststellbar ausgebildet sind. Gegenüber dem Fahrgestell verschieblich ist auch noch ein Laderahmen vorgesehen, um insgesamt die Längenveränderungen durchzuführen. Durch den Pfeil 2.1 in Fig. 5 ist veranschaulicht, dass der hintere Fahrgestellquerträger 2 in Richtung der Pfeile zwecks Verlängerung bzw. Verkürzung des Fahrgestellchassis bewegt werden kann.

An den seitlichen Endbereichen des hinteren Fahrgestellquerträgers sind die allgemein mit 5 bezifferten Feststeller vorgesehen. Diese sind höhenveränderlich an dem hinteren Fahrgestellquerträger abgestützt, wo sie in dem gezeigten Ausführungsbeispiel innerhalb eines Gehäuses 6 angeordnet sind, das in dem dortigen Ausführungsbeispiel 2 in unterschiedlichen Höhenlagen vorgesehene Ausnehmungen 7 in im wesentlichen Vierkantgestalt aufweist. In diese Ausnehmung 7 ist ein Abstützelement 8 des inneren Feststellerelementes 5.1 einzuführen. Dieses Abstützelement 8 hat an seinen jeweiligen Endbereichen auch eine Vierkantgestaltung, so dass es drehfest und arretiert in den Ausnehmungen 7 gehaltert ist. Das innere Feststellelement hat Verriegelungsansätze 5.3, einen Handgriff 5.4 und kann - im Einzelnen nicht weiter ersichtlich - federkraftbeaufschlagt in dem Gehäuse derart gehalten sein, dass die Abstützelemente sicher in den Ausnehmungen gelegen sind. Gleichwohl kann über den Handgriff 5.4 das innere Feststellelement z.B. gegen die Kraft einer Feder aus den Ausnehmungen herausgenommen werden, wodurch das Abstützelement den inneren Feststeller entriegelt, und nach oben in die obere Ausnehmung 7 eingesetzt werden kann. Dazu können Führungen und dergleichen zwischen Gehäuse und dem inneren Feststellelement vorgesehen sein. Gleichfalls ist es möglich, durch besondere Verriegelungselemente das innere Feststellelement 5.1 nach Änderung der Höhenpositionierung, wie sie im Einzelnen näher aus Fig. 2 hervorgeht, zu arretieren. Durch diese Höhenveränderung können Container mit Tunnelausbildung und Container ohne Tunnelausbildungen mit dem Fahrgestell gefahren werden.

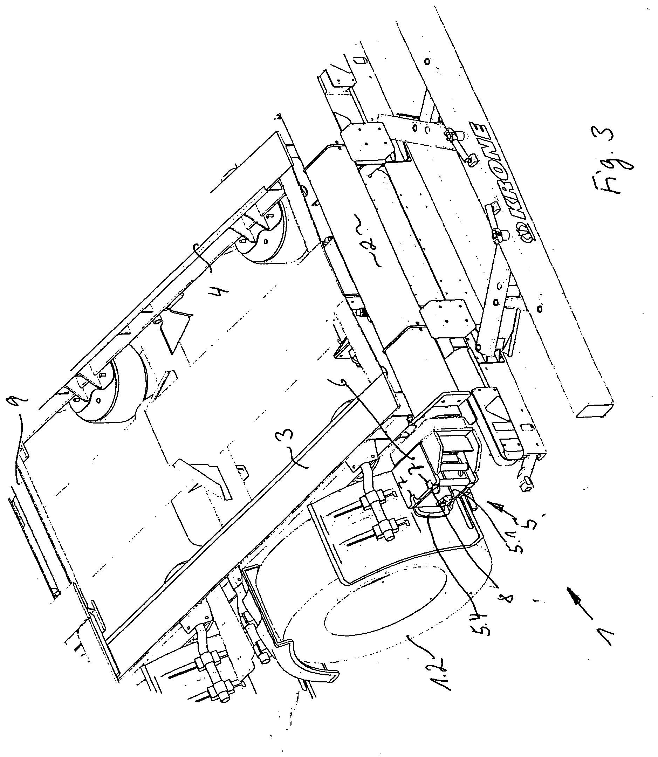

Wie im Einzelnen aus Fig. 2 hervorgeht, ist dem hinteren Fahrgestellquerträger 2 in Fahrgestellvorwärtsrichtung ein weiterer Fahrgestellquerträger 9 vorgeordnet. Dieser ist im Querschnitt im Wesentlichen wannenförmig ausgebildet und hat im Bereich seiner jeweiligen Seitenaußenbereiche 10 Ausnehmungen, so dass er dort einen Park- bzw. Aufnahmeraum ausbildet. Innerhalb der Wanne des weiteren Fahrgestellquerträgers sind weitere Feststeller 11 vorgesehen, die - wie aus dem in Fig. 2 linken Außenbereich ersichtlich ist - um eine Horizontalachse 12 eingeschwenkt werden können, so dass sie innerhalb der Wanne des weiteren Fahrgestellquerträgers 9 in eine versenkte Außerbetriebsstellung zu überführen sind, jedoch wie in Fig. 2 im rechten Außenbereich des weiteren Fahrgestellquerträgers angedeutet, auch in die aufgeschwenkte sichere Position zwecks Verriegelung eines Containers, z.B. eines 20 Fuß-Containers. Da in dieser vollständig eingefahrenen Position das Fahrgestellchassis 1 und des Laderahmens können die an dem hinteren Fahrgestellquerträger vorgesehenen Feststeller 5 außer Betrieb bleiben und die weiteren Feststeller F zum Einsatz kommen. Dazu ist der Feststeller 5.1 in Fahrgestellvorwärtsrichtung um eine quer zur Fahrgestelllängsrichtung bzw. um eine Horizontalachse in Fahrgestellvorwärtsrichtung verschwenkbar, wie dies Fig. 3 zeigt. Dabei ist das Abstützelement 8 in der unteren Ausnehmung 7 des Gehäuses 6 gelegen.

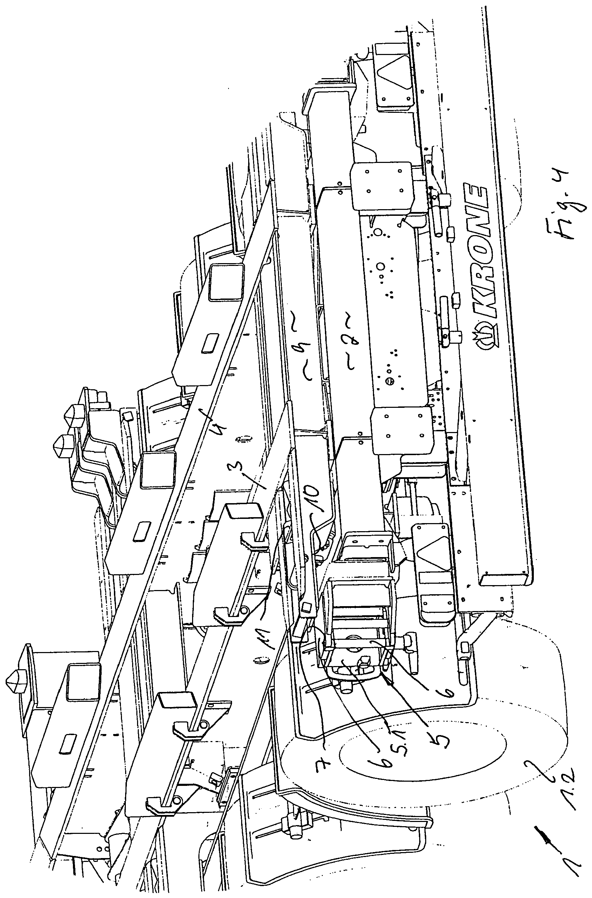

Fig. 4 verdeutlicht, dass der Laderahmen in Richtung auf den hinteren Querträger verschoben worden ist, so dass der Feststeller des hinteren Fahrgestellquerträgers unterhalb dieses weiteren Fahrgestellquerträgers gelegen ist, und zwar in seinem Bereich seiner seitlichen Ausnehmung 10, wie dies auch in der Seitenansicht noch einmal näher Fig. 5 veranschaulicht.

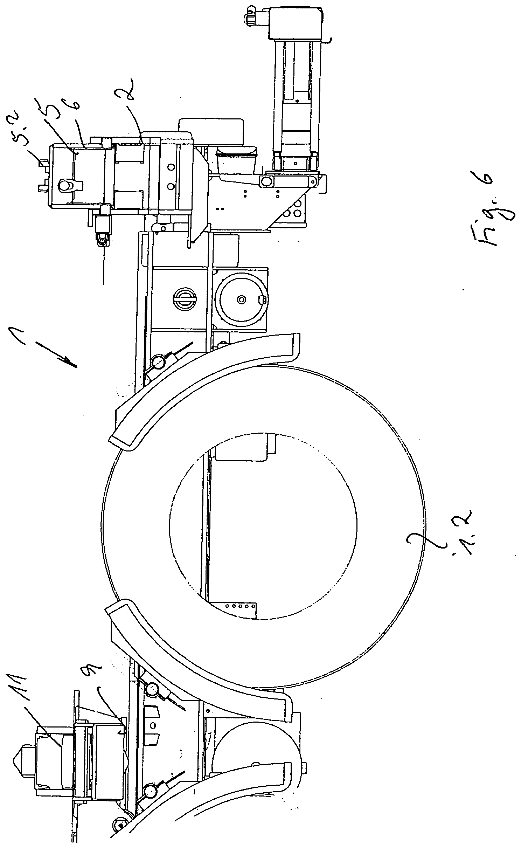

Fig. 6 zeigt eine Position, wo sowohl der hintere Feststeller 5 bei ausgefahrenem hinteren Fahrgestellquerträger 2 als auch die weiteren Feststeller des weiteren, dem hinteren Fahrgestellquerträgers 2 vorgeordneten Fahrgestellquerträgers in Verriegelungsposition sind, und zwar der hintere Feststeller 5 in seiner erhöhten Verriegelungsposition, so dass auch Container größerer Länge an mehreren Verriegelungspunkten fixiert und arretiert werden können.

## Patentansprüche

1. Fahrgestell (1) für Container, Aufbauten und dergleichen Ladungsbehälter mit einem längenverstellbaren Fahrgestellchassis mit Fahrgestelllängstraversen und mit einem in Fahrgestelllängsrichtung hinteren Fahrgestellquerträger (2), der lageveränderlich an dem Fahrgestellchassis feststellbar ist und an seinen seitlichen Endbereichen jeweils einen schwenkbeweglich gehaltenen Feststeller (5) zur Sicherung von Ladungsbehältern aufweist, wobei der Feststeller (5) höhenveränderlich an dem hinteren Fahrgestellquerträger (2) abstützbar und aus einer im wesentlichen aufrechten Sicherungsstellung um eine im wesentlichen quer zur Fahrgestelllängsrichtung ausgerichtete Schwenkachse durch eine Schwenkbewegung in Fahrgestellvorwärtsrichtung und eine Lageveränderung des hinteren Fahrgestellquerträgers (2) gegenüber einem Fahrgestellteil und/oder einem Laderahmengestellteil in eine Außerbetriebsstellung überführbar ist, **dadurch gekennzeichnet, dass** der Feststeller (5) derart höhenveränderlich und schwenkbar an dem hinteren Fahrgestellquerträger (2) abstützbar ist, dass er in eine unterhalb eines dem hinteren Fahrgestellquerträger (2) vorgeordneten weiteren Fahrgestellquerträgers (9) gelegene Außerbetriebsstellung überführbar ist.

2. Fahrgestell nach Anspruch 1, **dadurch gekennzeichnet, dass** der dem hinteren Fahrgestellquerträger (2) in Fahrgestelllängsrichtung vorgeordnete weitere Fahrgestellquerträger (9) jeweils einen seitlichen Ausnehmungsbereich (10) hat, in dem der Feststeller (5) in seiner verschwenkten Außerbetriebsstellung angeordnet ist.

3. Fahrgestell nach Anspruch 1 oder 2, **dadurch gekennzeichnet, dass** der Feststeller (5) in einem mit dem hinteren Fahrgestellquerträger (2) verbindbaren Gehäuse abstützbar ist, das zumindest zwei in unterschiedlichen Höhenlagen vorgesehene Abnehmungen (7) zur höhenveränderlichen Anordnung des Feststellers (5) innerhalb des Gehäuses (6) aufweist.

4. Fahrgestell nach Anspruch 3, **dadurch gekennzeichnet, dass** das Gehäuse in unterschiedlichen Höhenpositionen Ausnehmungen (7) aufweist, in denen Abstützelemente (8) des Festesteller (5) einführbar und feststellbar sind zwecks höhenveränderlicher Anordnung des Feststellers (5).

5. Fahrgestell nach Anspruch 4, **dadurch gekennzeichnet, dass** die Ausnehmungen (7) eine viereckige Gestalt haben, in die Vierkantbereiche von Abstützelemente (8) des Feststellers (5) einführbar sind.

6. Fahrgestell nach einem der Ansprüche 1 bis 5, **dadurch gekennzeichnet, dass** der Feststeller (5) innerhalb des Gehäuses (6) beweglich zwecks Ein- und Ausführung aus den Ausnehmungen (7) angeordnet ist.

7. Fahrgestell nach einem der Ansprüche 1 bis 6, **dadurch gekennzeichnet, dass** der Feststeller (5) mitsamt seinem Gehäuse (6) um ca. 90° in Fahrgestellvorwärtsrichtung verschwenkbar ist.

8. Fahrgestell nach einem der Ansprüche 1 bis 7, **dadurch gekennzeichnet, dass** der Feststeller (5) in Fahrgestellquerrichtung aus einer Höhenposition herausbewegbar und entriegelbar ist und in seiner verschwenkten Position wieder in Fahrzeugquerrichtung in eine Verriegelungsposition überführbar ist.

9. Fahrgestell nach einem der Ansprüche 1 bis 8, **dadurch gekennzeichnet, dass** der dem hinteren Fahrgestellquerträger (2) in Fahrgestelllängsrichtung vorgeordnete weitere Fahrgestellquerträger (9) im wesentlichen wannenförmig ausgebildet und an seinen jeweiligen Außenbereichen seinerseits um eine Horizontalachse verschwenkbare Feststeller (11) aufweist, die aus einer innerhalb des wannenförmigen Fahrgestellquerträgers (9) gelegenen Außerbetriebsstellung in eine verschwenkte Betriebsstellung überführbar sind.

## Claims

1. Carriage (1) for large-capacity containers, superstructures and similar load containers, comprising a longitudinally adjustable carriage chassis, which has longitudinal carriage crossbars, and a carriage crossmember (2), which is positioned at the rear in the longitudinal direction of the carriage, can be fastened to the carriage chassis so as to be position-adjustable, and comprises, on each lateral end region thereof, a pivotably mounted fastening means (5) for securing load containers, the fastening means (5) being able to be supported on the rear carriage crossmember (2) so as to be height-adjustable, and being moveable, about a pivot axis which is substantially transverse to the longitudinal direction of the carriage, by means of a pivoting movement in the forward direction of the carriage and a change in position of the rear carriage crossmember (2) relative to a carriage part and/or a loading frame part, from a substantially upright secured position to an out-of-service position, **characterised in that** the fastening means (5) is can be height-adjustably and pivotably supported on the rear carriage crossmember (2) such that said fastening means can be moved into an out-of-service position located under a further carriage crossmember (9) which is arranged in front of the rear carriage crossmember (2).

2. Carriage according to claim 1, **characterised in that** the further carriage crossmember (9), which is arranged in front of the rear carriage crossmember (2) in the longitudinal direction of the carriage, comprises a recessed region (10) on each side, in which region the fastening means (5) is arranged when in the pivoted out-of-service position thereof.

3. Carriage according to either claim 1 or claim 2, **characterised in that** the fastening means (5) can be supported in a housing which can be connected to the rear carriage crossmember (2) and comprises at least two recesses (7), provided at different vertical positions, for arranging the fastening means (5) inside the housing (6) so as to be height-adjustable.

4. Carriage according to claim 3, **characterised in that** the housing comprises recesses (7) at different vertical positions, in which recesses support elements (8) of the fastening means (5) can be introduced and fastened in order to arrange the fastening means (5) so as to be height-adjustable.

5. Carriage according to claim 4, **characterised in that** the recesses (7) have a square shape into which square regions of support elements (8) of the fastening means (5) can be introduced.

6. Carriage according to any of claims 1 to 5, **characterised in that** the fastening means (5) is moveably arranged inside the housing (6) for the purpose of being introduced into and removed from the recesses (7).

7. Carriage according to any of claims 1 to 6, **characterised in that** the fastening means (5), together with the housing (6) thereof, can be pivoted by approximately 90° in the forward direction of the carriage.

8. Carriage according to any of claims 1 to 7, **characterised in that** the fastening means (5) can be moved out of and released from a vertical position in the transverse direction of the carriage and, in the pivoted position thereof, can be moved again, in the transverse direction of the carriage, into a locked position.

9. Carriage according to any of claims 1 to 8, **characterised in that** the further carriage crossmember (9), which is arranged in front of the rear carriage crossmember (2) in the longitudinal direction of the carriage, is substantially well-shaped and comprises, on each outer region thereof, fastening means (11) which can be pivoted about a horizontal axis and which can be moved from an out-of-service position, which is located inside the well-shaped carriage crossmember (9), into a pivoted operating position.

## Revendications

1. Dispositif de déplacement (1) destiné à des conteneurs, des carrosseries et des récipients de fret analogues, comprenant un châssis réglable en longueur muni d'un longeron et d'une traverse arrière (2), par référence à la direction longitudinale du châssis, qui peut être fixée au châssis de manière variable en position et qui comporte au niveau de chacune de ses régions d'extrémité latérales un élément de verrouillage (5) supporté de manière pivotante et destiné à fixer des récipients de fret, l'élément de verrouillage (5) pouvant venir s'appuyer de manière variable en hauteur sur la traverse arrière (2) du dispositif de déplacement et pouvant être transféré d'une position de fixation sensiblement verticale vers l'avant du dispositif de déplacement par un mouvement de pivotement autour d'un axe de pivotement orienté sensiblement transversalement à la direction longitudinale du dispositif de déplacement et par un changement de position de la traverse arrière (2) du dispositif de déplacement par rapport à une partie du dispositif de déplacement et/ou une partie de la baie de chargement jusque dans une position hors fonctionnement, **caractérisé en ce que** l'élément de verrouillage (5) peut venir s'appuyer de manière variable en hauteur et de manière pivotante sur la traverse arrière (2) du dispositif de déplacement de façon à pouvoir être transféré dans une position hors fonctionnement située au-dessous d'une autre traverse (9) du dispositif de déplacement située en amont de la traverse arrière (2) du dispositif de déplacement.

2. Dispositif de déplacement selon la revendication 1, **caractérisé en ce que** l'autre traverse (9) du dispositif de déplacement, située en amont de la traverse arrière (2) du dispositif de déplacement par référence à a direction longitudinale du dispositif de déplacement, possède une zone évidée latérale (10) dans laquelle l'élément de verrouillage (5) est disposé dans sa position hors fonctionnement pivotée.

3. Dispositif de déplacement selon la revendication 1 ou 2, **caractérisé en ce que** l'élément de verrouillage (5) peut venir s'appuyer dans un boîtier qui peut être relié à la traverse arrière (2) du dispositif de déplacement et qui comporte au moins deux évidements (7) prévus à différentes positions en hauteur et destinés à disposer l'élément de verrouillage (5) dans le boîtier (6) de manière variable en hauteur.

4. Dispositif de déplacement selon la revendication 3, **caractérisé en ce que** le boîtier comporte à différentes positions en hauteur des évidements (7) dans lesquels des éléments d'appui (8) de l'élément de verrouillage (5) peuvent être introduits et fixés afin de disposer l'élément de verrouillage (5) de manière variable en hauteur.

5. Dispositif de déplacement selon la revendication 4, **caractérisé en ce que** les évidements (7) ont une forme quadrangulaire dans laquelle des régions carrés d'éléments d'appui (8) de l'élément de verrouillage (5) peuvent être insérées.

6. Dispositif de déplacement selon l'une des revendications 1 à 5, **caractérisé en ce que** l'élément de verrouillage (5) est disposé dans le boîtier (6) de manière mobile afin d'être inséré dans les évidements (7) et être retirés de ceux-ci.

7. Dispositif de déplacement selon l'une des revendications 1 à 6, **caractérisé en ce que** l'élément de verrouillage (5) peut être pivoté conjointement avec son boîtier (6) d'environ 90° vers l'avant du dispositif de déplacement.

8. Dispositif de déplacement selon l'une des revendications 1 à 7, **caractérisé en ce que** l'élément de déplacement (5) peut être écarté d'une position en hauteur dans la direction transversale du dispositif de déplacement et, dans sa position pivotée, être transféré dans une position de verrouillage à nouveau dans la direction transversale du dispositif de déplacement.

9. Dispositif de déplacement selon l'une des revendication 1 à 8, **caractérisé en ce que** l'autre traverse (9) du dispositif de déplacement, située en amont de la traverse arrière (2) du dispositif de déplacement par référence à a direction longitudinale du dispositif de déplacement, est sensiblement en forme de cuvette et comporte de son côté, au niveau de ses régions extérieures respectives, des éléments de verrouillage (11) qui peuvent pivoter sur un axe horizontal et qui peuvent être transférés d'une position hors fonctionnement située à l'intérieur de la traverse (9), en forme de cuvette, du dispositif de déplacement jusque dans un position de fonctionnement pivotée.
